# EUROPEAN PATENT SPECIFICATION

(11) **EP 1 360 867 B1**
(45) Date of publication and mention of the grant of the patent: **21.08.2013**
(21) Application number: 02727323.4
(22) Date of filing: 14.02.2002
(51) Int. Cl.: H04W 48/12, H04W 60/04, H04W 88/14

(54) **SIGNALLING CONNECTION TO A POOL OF NETWORK ELEMENTS**
SIGNALISIERUNGSVERBINDUNG ZU EINER GRUPPE VON NETZELEMENTEN
CONNEXION DE SIGNALISATION A UN ENSEMBLE D'ELEMENTS DE RESEAU

(30) Priority: 14.02.2001 EP 01103399
(43) Date of publication of application: 12.11.2003
(73) Proprietor: Telefonaktiebolaget LM Ericsson (publ), 164 83 Stockholm (SE)
(72) Inventor: TURINA, Klaus, 71522 Backnang (DE); BELLORA, Mauro, I-21013 Gallarate (IT); BASERGA, Aldo, I-22038 Tavernerio (IT)
(74) Representative: Kribber, Klaus-Dieter
(86) International application number: PCT/EP2002/001598
(87) International publication number: WO 2002/065802

(56) References cited:
- WO-A-00/28771
- US-A- 5 305 466
- US-A- 6 091 953
- US-A- 6 097 951
- US-A- 6 101 388
- NOKIA: "Introducing flexibility to the Iu interface", 3GPP DRAFT; R3-002586_IUFLEXIBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Windsor, UK; 20001012, 12 October 2000 (2000-10-12), XP050148134, [retrieved on 2000-10-12]
- ERICSSON ET AL: "Input to connection of multiple core network nodes", 3GPP DRAFT; S2-010737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Gothenburg; 20010305, 5 March 2001 (2001-03-05), XP050234784, [retrieved on 2001-03-05]

## Description

The invention addresses the field of mobile communications. It relates to methods, a user equipment, a radio network element and computer program for determming in a mobile communications network a network element of a pool of network elements for service provisioning.

### Technological background of the invention

Both circuit switched and packet switched mobile communications networks like GSM, GPRS and UMTS provide methods for location management. In circuit switched domains so-called location areas are defined. Routing areas are defined in addition in packet switched domains. Known methods of location management are the so-called location area or routing area update procedures, wherein a mobile terminal of the communications network requests a location / routing area update, e.g., if it recognises that it has moved from one location /routing area of the network to another. Details about location / routing area update procedures can be found in 3GPP-TS 23.012 V 3.3.0 and 3GPP-TS 24.008 V 3.6.0.

In order to allow the mobile terminal to detect a change of the location / routing area, a location area identifier LAI, or routing area identifier RAI respectively, is broadcasted regularly within said location area or routing area by the base station system serving this area. The base station system of the 2nd generation systems like GSM is represented by a base station controller BSC in the following, of the 3G systems like UMTS by the radio network controller RNC respectively. As defined in 3GPP-TS 23.003 V 3.7.0 a LAI consists of a mobile country code MCC, a mobile network code MNC and a location area code LAC. The latter identifies the location area. A RAI consists in addition of a routing area code RAC identifying the routing area.

As described in 3GPP-TS24.008 the mobile terminal checks, whether the currently received LAI/RAI corresponds to its stored, last known LAI/RAI and sends a location area update request or routing area update request to the network if there is any discrepancy.

In any case the mobile terminal contacts the network, it identifies itself by means of a temporary mobile subscriber identity TMSI in the circuit switched domain, or by means of a packet temporary mobile subscriber identity P-TMSI in the packet domain. The TMSI is assigned to the mobile terminal by its serving mobile switching centre/visited location register MSC/VLR. The P-TMSI is assigned by a serving GPRS support node SGSN. Each temporary identity is assigned uniquely within a location area.

The TMSI/P-TMSI has a fixed length of 32 bit. It consists of subscriber address bits identifying an address of the subscriber record in the MSC/VLR or SGSN, of reserved bits needed for reallocation purposes like restart counters etc., and two domain identifier bits indicating whether the subscriber identity is a TMSI or a P-TMSI.

In order to identify itself towards the network, e.g. in the case of location / routing area update request, the mobile terminal sends the TMSI/P-TMSI together with an information, in which location area or routing area this temporary identifier has been assigned. The BSC/RNC receiving these information transmits them to the serving MSC/VLR or SGSN. Based on these information the MSC/VLR or SGSN determines whether it already serves the mobile terminal, or whether it has to require any data from a formerly serving MSC/VLR or SGSN or from a home location register HLR. When the required data are available at the MSC/VLR or SGSN, the MSC/VLR or SGSN can serve the mobile terminal, e.g. by performing a location update procedure.

The current architecture of mobile communications networks provides one MSC/VLR or SGSN serving a location area or routing area. Each BSC or RNC has a uniquely assigned serving MSC/VLR or SGSN. The BSC or RNC clearly knows, to which MSC/VLR or SGSN any messages sent from a mobile terminal are to be transmitted.

The increasing demand on mobile communications services requires new measures regarding load distribution and service availability in order to cope with the increasing traffic volume. It is the aim to provide at each MSC/VLR or SGSN the same quality of service. The introduction of MSC/VLR pools or SGSN pools in mobile communications networks can fulfil the outlined demands. By applying to the pool concept, each MSC/VLR or SGSN within a pool is serving the same service area, so-called MSC/SGSN pool service area. Each of the BSCs or RNCs within the MSC/SGSN pool service area can be logically connected to each MSC/VLR or SGSN within the pool. Nevertheless, a mobile terminal shall be served within a pool service area by the same MSC/VLR or SGSN of the pool as long as it roams within the pool service area to avoid unnecessary signalling traffic and delays caused by changing the MSC/VLR or SGSN.

The introduction of the pool concept calls off the unique assignment of a serving MSC/VLR or SGSN to a BSC or RNC. Therefore, the BSC or RNC does not know to which MSC/VLR or SGSN messages received from a mobile terminal are to be transmitted.

US-A-6 097 951 outlines a concept of pooled MSCs using a dispatcher mobile switching center DMSC being coupled between a BSS and a pool of MSCs. The DMSC is used to establish communication and to distribute mobile station subscribers and call related work among the pool MSCs. DMSC provides a table of subscribers and corresponding MSC/VLR entries. It assigns mobile-IDs to MSC/VLR-IDs for the purpose of routing. In order to support Inter VLR-location updates, a location area identifier is broadcasted that includes a single VLR-ID. This single VLR-ID can be equal to one of the MSC's, or could be a completely different one. Doing so, a dedicated node ID of a node of the pool is broadcasted.

US-A-5 305 466 refers to a location registration and paging procedure for mobile stations in a mobile communications system. The procedure determines, whether a mobile station that has entered a new radio zone should register the location there, depending on the radio zone where it has registered last. The mobile memorizes the location information, i.e. it records as route information the identification if a radio zone, where it has registered, and the radio zones, which it has passed after location registration. If the mobile determines that it should register its location in the radio network, it reports the route information to the radio network. In this way, a radio base station learns the route information sent from a mobile station having registered the location there, and sets up a location area by taking account a course which the mobile station will take. This allows for adapting the set-up of a radio location area by a radio base station.

### Summary of the invention

It is therefore an object of the present invention to improve the routing of information from a user equipment via a radio network element to a pool network element serving the user equipment.

This is solved by the teaching of the independent claims.

In order to support the set-up of a signalling connection of a user equipment, e.g. a mobile phone, a laptop or a video terminal, to a mobile communications network, e.g. a GSM, GPRS or UMTS network, broadcasts a radio network element, e.g. a BSC or a RNC, of the network in a dedicated area a location information, which comprises a mobile country code, a mobile network code and an area identifier. The location information comprises further at least one pool identifier identifying at least one pool of network elements serving the area.

Advantageously, the pool identifier can be broadcasted within the already defined broadcast information location area information LAI in the circuit switched domain and within the routing area information RAI in the packet domain. The overall format of said messages remains unchanged. Therefore, without being limited to the above mentioned systems, the invention requires only minor changes for them while guarantying a maximum compatibility with already existing or designed systems using the known LAI or RAI.

The user equipment determines based on the received pool identifier a pool registration parameter that indicates, whether the user equipment is already served, i.e. registered, at the corresponding pool of network elements. The user equipment can send in all cases, wherein it contacts the mobile communications network, the pool registration parameter in an initial transfer message to the BSC or RNC, i.e. the user equipment can inform in all cases it identifies itself towards the network the BSC/RNC about its pool registration status.

Advantageously, this can be done for the systems mentioned above - without being limited to them - within the already defined so-called initial direct transfer message, which requires if used as the initial transfer message of the invention only minor changes, and thus provides maximum compatibility with already existing or designed systems and user equipment. Furthermore, the pool registration indicator requires just one bit for its representation, which is very resource-efficient in particular with respect to the limited resources of the air interface.

When a radio network element receives an initial transfer message, it uses the pool registration parameter value for the determining of the pool network element, to which the routing of at least some information given in the initial transfer message is performed. One possibility to determine the appropriate pool network element if the pool registration parameter value indicates that the user equipment is already registered at the pool can be a retrieval of the appropriate address from a pool controller. Alternatively, a lookup table provided at the radio network element might be used. Advantageously, the initial transfer message can terminate at the radio network element. Only information relevant for the pool network element is necessary to be routed.

The invention is for implementation in a radio network element like a BSC, RNC or a separate network node. It might be represented by a pure server implementation. The radio network element realising the routing function can be implemented in a pool controller located at the pool of network elements, at a BSC or RNC or stand-alone. Therefore, the invention provides good flexibility with regards to possible implementations.

The user equipment can be any terminal like a GSM-, GPRS- or UMTS-phone,-laptop or -adapter. Furthermore, the invention can be realised by a computer program, which is loadable into the internal memory of a digital processing unit, comprising software code portions adapted to control the steps of the described methods, when the computer program is executed on the digital processing unit. Therefore, servers representing network elements according to the present invention can easily be adapted to the inventive function.

Advantageously, the invention allows for the use of a pool of network elements in a mobile communications network, and therefore supports load distribution and redundancy measures based on a pool concept in the network. It allows for the provisioning of a good quality of service level within the whole network.

Preferred embodiments of the invention are described in the dependent claims.

In a preferred embodiment, the appropriate network element of the pool can be chosen by the radio network element itself, e.g. by means of a load sharing algorithm, per default choice , randomly or by a round robin algorithm if the pool registration parameter value indicates that the user equipment is not registered at the pool. This provides for an operator of the network a high flexibility in the used choice-strategy. Furthermore, there is no need to evaluate any network element identifier that might be provided.

In one preferred embodiment sends the user equipment a network element identifier that identifies a dedicated network element, at which the user equipment is registered, wherein the dedicated network element is identified uniquely within the pool of network elements. In one embodiment the radio network element has to consider only this network element identifier, if the pool registration parameter value indicates a registration, in order to determine the appropriate network element of the pool. Thus, maximum efficiency is provided.

The network element identifier can be provided within the already known TMSI or P-TMSI without changes of their overall formats, i.e. of their overall lengths.

In a preferred embodiment the computer program is stored on a computer readable medium like a CD-ROM, a floppy disc, optical disc or hard disk. Therefore, a good physical portability of the control software is provided, i.e. upgrades can be performed in an easy way.

In the following, the invention is described in detail with reference to the figures.

### Brief description of the figures:

- Fig. 1: shows a simplified mobile communications network,
- Fig. 2: shows in a message diagram a set-up of a signalling connection,
- Fig. 3a: shows a structure of a location information in a circuit switched domain,
- Fig. 3b: shows a structure of a location information in a packet switched domain,
- Fig. 4: shows a structure of a temporary subscriber identifier,
- Fig. 5: shows in a flow diagram a set-up of a signalling connection by a user equipment, and
- Fig. 6: shows in a flow diagram a set-up of a signalling connection by a radio network element.

### Detailed description

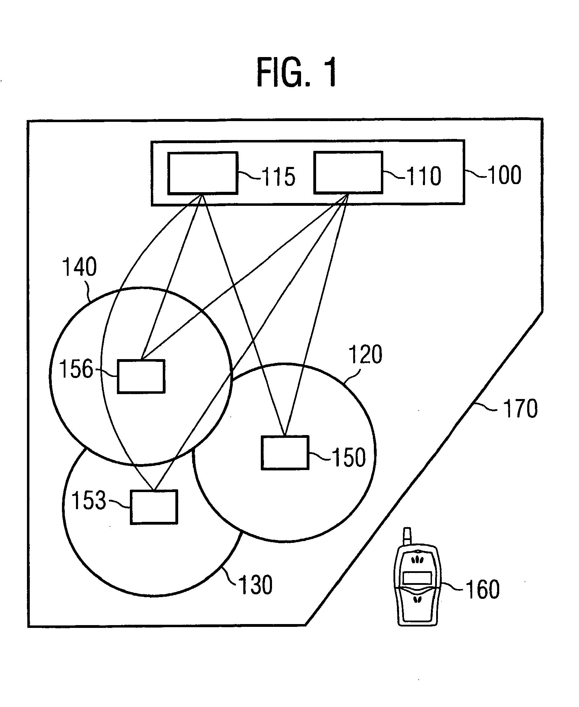

Fig. 1 shows a simplified mobile communications network 170 and a user equipment 160, e.g. a mobile terminal. The figure shows those elements of the network, which are necessary for the understanding of the invention. The network comprises a pool 100 of network elements 110, 115. Such network elements are e.g. in a circuit switching network MSC/VLR nodes or in a packet switching network SGSN nodes. The network elements 110, 115 of the pool 100 can be connected to each other, and they can be connected to a pool controller (not shown in the figure). The network elements 110, 115 of the pool 100 perform e.g. switching tasks in the network and service provisioning to the user equipment 160. The pool 100 can comprise a plurality of network elements. Furthermore, the mobile communications network 170 can comprise a plurality of pools. The network elements of the pool can have different processing capacities and can provide different services.

The coverage of the mobile communications network 170 is divided into a plurality of locations areas 120, 130, 140. In the packet switched domain, a location area can be subdivided into routing areas (not shown in the figure). Each location area is served by at least one radio network element 150, 153, 156. A radio network element can be e.g. in GSM systems a base station controller BSC or in UMTS systems a radio network controller RNC connected to a plurality of base transceiver stations BTS. In another embodiment, the radio network element refers to a base transceiver station BTS itself.

The radio network elements 150, 153, 156 are connected to more than one network element of the pool 100. In figure 1, each radio network element is connected with each network element of the pool (called as well pool network element in the following). In an alternative embodiment, the radio network elements are connected to the pool network elements via a pool controller (not shown in the figure).

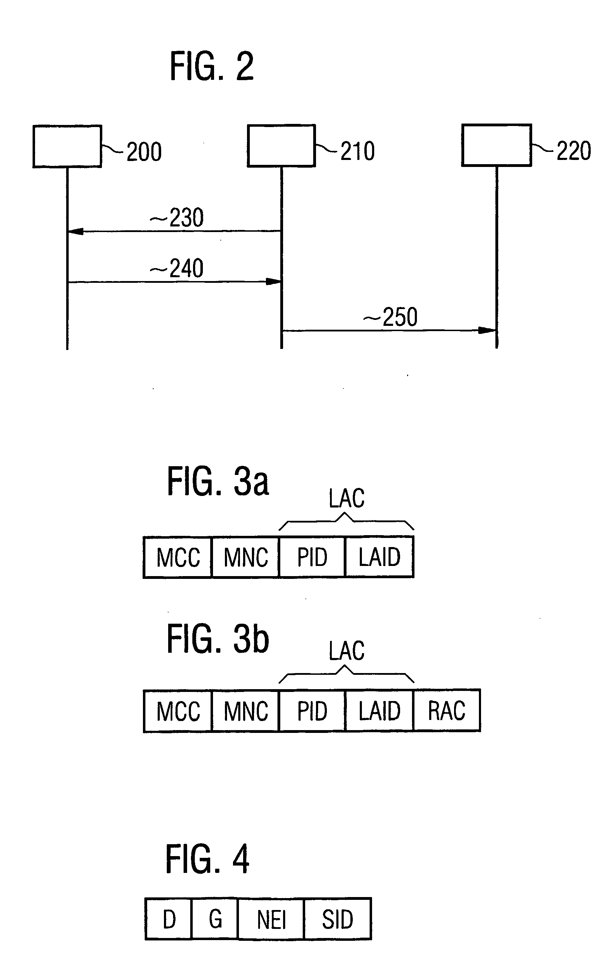

Fig. 2 illustrates simplified a set-up of a signalling connection from a user equipment 200 to the mobile communications network 170. The signalling connection, which can be either a circuit switched or packet switched connection, is set-up via a radio network element 210 to a pool network element 220. Such a set-up can be performed in each case the user equipment contacts the network, e.g. either for or for the purpose of location update or call set-up, or for registering at the network, e.g. after the user equipment has been switched on.

The set-up outlined in the figure does not show the messages exchanged between the user equipment 200 and the radio network element 210 that are necessary to establish the radio connection itself between these nodes, as the invention does not refer to the so-called radio set-up, and as a person skilled in the art is familiar with it.

In order to support the set-up of the signalling connection, the radio network element 210 broadcasts a location information 230. The location information is specific for the area served by the radio network element. The location information broadcasted in the different location areas 150, 153, 156 shown in figure 1 is different each. The same principle applies in a packet switched domain for routing areas.

In a circuit switched domain, a location area information LAI as explained in figure 3a is broadcasted as location information. In a packet switched domain, a routing area information RAI as explained in Fig. 3b is broadcasted as location information. The location information 230 comprises a pool identifier identifying the pool 100 of network elements 110, 115 serving the location area.

If the user equipment 200 contacts the mobile communications network 170, i.e. if a message transfer or a communication is initiated, it sends via an air interface an initial transfer message 240 to the radio network element 210. The user equipment identifies itself towards the network 170 by a temporary subscriber identity, which can be part of the initial transfer message 240. In the circuit switched domain, the temporary subscriber identity can be the temporary mobile subscriber identity TMSI. In the packet switched domain, the packet temporary mobile subscriber identity P-TMSI can be used. Both TMSI and P-TMSI are explained with reference to figure 4.

The temporary subscriber identity assigned to the user equipment 200 is location area or routing area dependent. If the user equipment changes the area, another temporary subscriber identity is assigned. In one embodiment of the invention, the user equipment sends in addition with any transmission of the temporary subscriber identity an information, e.g. within the initial transfer message 240, from which location area or routing area the temporary subscriber identity has been assigned, in order to allow a network element of a different location area or routing area to retrieve eventually needed data from the corresponding network element that has the temporary subscriber identity assigned.

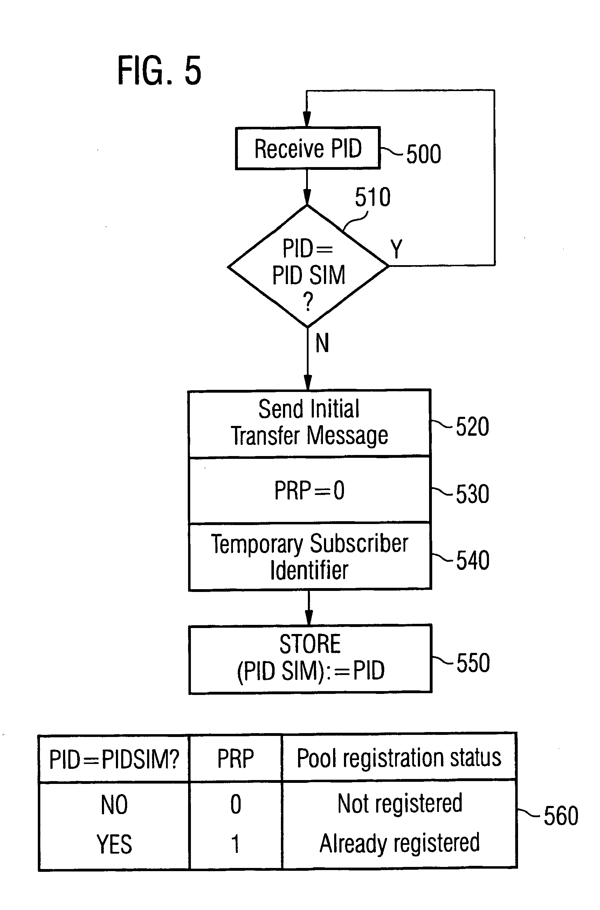

If the user equipment contacts the network for signalling purposes, it sends the initial transfer message 240. This can be e.g. the so-called initial direct transfer message, which is described in 3GPP TS-25.331 V 3.5.0. The initial transfer message 240 comprises a pool registration parameter, of which value indicates that the user equipment 200 is already registered in the pool that serves the area wherein the user equipment is currently located, if the user equipment determines that the pool identifier received within the location information 230 and a pool identifier stored in the user equipment 200 are equal. The pool registration parameter value indicates that the user equipment is not registered in the pool if the received pool identifier and the stored pool identifier are not equal. Details of the determination of the pool identifier to be used by the user equipment 200 are explained with reference to figure 5.

The initial transfer message comprises preferably the temporary subscriber identity. Alternatively, the temporary subscriber identity might be sent as a separate message or within another message to the radio network element 210.

Preferably, the initial transfer message comprises furthermore a network element identifier that identifies that network element 220, at which the user equipment 160, 200 is registered. The dedicated network element 220 is identified uniquely within the pool 100 of network elements 150,153,156, 220, i.e. there are no duplicate network identifiers belonging to network elements 110, 115 within the same pool in the same domain.

Alternatively, the network element identifier can be sent in a separate message or within another message to the radio network element 210. As explained with respect to figure 4, the network element identifier can be comprised in the subscriber identity, e.g. in the TMSI or P-TMSI. Alternatively, the network element identifier can be included as a separate parameter within the initial transfer message.

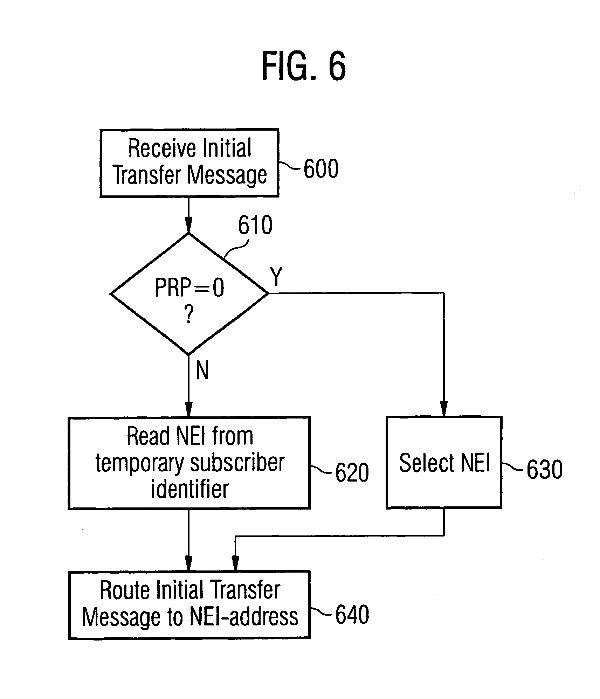

The radio network element 210 determines as described with reference to figure 6 the pool network element 220, to which information given in the initial transfer message is at least partly to be routed within a signalling message 250. The initial transfer message 240 can be routed at all in the message 250 to the pool network element 220. Alternatively, the radio network element 210 might drop or add some signalling information for the further transmission. At least a mobile identifier and a higher layer information can be transmitted further, e.g. a location area update request itself.

The routing of the signalling message 250 can be performed via a direct connection from the radio network element 210 to the pool network element 220. In an alternative embodiment, the routing can involve a plurality of network nodes, which are transparent, i.e. without effect, to the message 250 itself. At least, the pool network element 220 receives the signalling message 250 and takes care for the further processing.

Fig. 3a shows a preferred embodiment of the structure of the location information, which is in a circuit switched domain broadcasted from a radio network element of the communications system. The overall format corresponds to the location area information LAI as defined in 3GPP TS-23.003 V 3.7.0. The LAI as already known comprises 3 digits for a mobile country code MCC identifying a country, 2 or 3 digits for a mobile network code MNC identifying a mobile network, and 2 octets, i.e. 16 bits, for a location area code LAC identifying a location area. According to a preferred embodiment of the invention, the LAC is divided into a pool identifier PID identifying uniquely within a mobile communications network 170 a pool 100 comprising network elements 110, 115, and into a location area identifier LAID identifying a location area. More preferably, the PID and the LAID have a length of 8 bit each. Therefore it is possible to address up to 256 different pools 100 per mobile communications system 170, and to address up to 256 different location areas per pool 100.

Fig. 3b shows a preferred embodiment of the structure of the location information, which is in a packet switched domain broadcasted from a radio network element of the communications system. The overall format corresponds to the routing area information RAI as defined in 3GPP TS-23.003 V 3.7.0. The structure of the location information used in a packet switched domain of a communications system corresponds in the invention to the structure as described with reference to figure 3a apart from an additional octet comprising a routing area code RAC.

Fig. 4 shows a preferred embodiment of a temporary subscriber identity, which identifies uniquely and temporary a subscriber within a location area or routing area. The overall format corresponds to the temporary mobile subscriber identity TMSI for a temporary subscriber identity in a circuit switched domain, and it corresponds to the packet temporary mobile subscriber identity P-TMSI for a temporary subscriber identity in a packet switched domain, both as defined in 3GPP TS 23.003 V 3.7.0. The temporary subscriber identity has preferably a length of 32 bit and comprises a domain indicator D having 2 bits indicating a circuit switched domain or a packet switched domain, a reallocation field G for reallocation data, e.g. for a restart counter, which is used to cope with a reallocation policy as known from TMSI/P-TMSI. Further comprised is a network element identifier NEI to identify a network element within a pool of network elements and a subscriber identifier SID to identify a mobile subscriber within a network element, e.g. within a MSC/VLR or SGSN. In a preferred embodiment of the invention the G has 5 bits, NEI has 5 bits, and SID has 20 bits.

Fig. 5 illustrates a set-up of a signalling connection by a user equipment 160, 200 to a mobile communications network 170. The shown example illustrates the case that the user equipment contacts the network for a location area update or a routing area update. Another example (not shown) for a user equipment that contacts the network is a call set-up.

In step 500, a first pool identifier PID, which identifies a pool 100 of network elements 110,115 220 of the communications network 170, is received, which is sent e.g. from a radio network element via a broadcast channel. In step 510, a pool registration parameter PRP is determined by comparing the first pool identifier with a second pool identifier PIDSIM, which is stored in a memory of the user equipment 160, 200, e.g. on a SIM card.

As explained in the table 560 shown in figure 5, PRP is set to '0' if PID is not equal to PIDSIM. In this case, the user equipment 160, 200 is currently not registered in the pool 100. PRP is set to '1' if PID is equal to PIDSIM. In that case, the user equipment 160, 200 is currently registered in the pool.

The user equipment 160,200 sends an initial transfer message to a radio network element 150,153,156, 210 of the mobile communications network 170, wherein the initial transfer message comprises the pool registration parameter PRP. In the shown embodiment, a temporary subscriber identifier is additionally comprised in the initial transfer message. The temporary subscriber identifier can comprise a network element identifier NEI. In an alternative embodiment, a temporary subscriber identifier is partly comprised in the initial transfer message. E.g., the initial transfer message can comprise the network element identifier NEI without the rest of the temporary subscriber identifier.

In an alternative embodiment, the network element identifier is sent to the radio network element by another, e.g. a separate message.

In the shown embodiment of figure 5, the stored pool identifier PIDSIM is updated with the received, i.e. currently valid, pool identifier PID. In a further embodiment, this update can depend on a positive acknowledgement of a location update by the communications network.

Fig. 6 illustrates a set-up of a signalling connection originating from a user equipment 200 by a radio network element 210 to a network element 220 of a pool 100 of network elements. The radio network element receives in step 600 an initial transfer message that comprises a pool registration parameter PRP, which indicates, whether the user equipment is already registered at the pool, and at least the network element identifier NEI. In the shown example the NEI is comprised in the temporary subscriber identifier. Alternatively, the NEI can be provided in another message or within a separate message.

By use of the PRP it is determined, to which network element of the pool 100 of network elements 150, 153, 156 the signalling connection is to be set-up. In step 610 it is checked, whether the PRP equals the value '0'. The value '0'indicates as shown in the table 560 of figure 5 that the user equipment 160 is not registered at the pool 100. The radio network element chooses in step 630 a network element, e.g. by selecting a valid NEI of the pool network elements. The choice can be performed e.g. based on a load sharing algorithm, randomly or by a round robin algorithm. As the PRP indicates that there is no existing pool relation, any NEI that has been received within the initial transfer message does not need to be considered for the determination of the network element, to which in step 640 the initial transfer message is routed.

If the PRP does not equals '0', the user equipment is supposed to be registered at the pool 100. In this case the NEI is read in step 620, e.g. from the temporary subscriber identifier. The network element that is addressed by the NEI is determined as that network element, to which the initial transfer message is routed in step 640.

In a further embodiment (not shown in the figure) the temporary subscriber identity and the network element identifier are stored in relation to each other, e.g. within a lookup table, for further routing transactions.

In a further embodiment the method as explained with reference to figure 6 comprises in addition the broadcasting of the location information as described with reference to figure 2.

Preferably the same network element takes care for the task of broadcasting of the location information and for the task of routing the initial transfer message.

Without being limited to, the invention can be used preferably in all communications systems as defined by 3GPP in the release 99 as well as in all future releases thereof. In particular, this includes UMTS networks, core networks, GSM networks and the corresponding user equipment.

## Claims

1. Method of supporting a set-up of a signalling connection, wherein a radio network element (150,153,156;210) of a mobile communications network (170) broadcasts in a dedicated area a location information, which comprises a mobile country code, a mobile network code and an area identifier,
**characterised in that**
the area identifier comprises at least one pool identifier identifying at least one pool of network elements serving the area.

2. Radio network element of a mobile communications network (170) adapted to broadcast in a dedicated area a location information, which comprises a mobile country code, a mobile network code and an area identifier,
**characterised in that**
the area identifier comprises at least one pool identifier identifying at least one pool of network elements serving the area.

3. Method of setting-up a signalling connection by a user equipment (160; 200) to a mobile communications network (170), wherein the user equipment (160;200) sends an initial transfer message to a radio network element (150,153,156; 210) of the mobile communications network (170),
**characterised in** the steps of
- receiving a location information broadcasted by the radio network element (150, 153, 156; 210) and consisting of a country code, a mobile network code and an area identifier, comprises a first pool identifier identifying a pool (100) of network elements (110,115; 220) of the communications network (170),
- determine a pool registration parameter by comparing the first pool identifier with a second pool identifier stored in a memory of the user equipment (160; 200), such that the pool registration parameter indicates that either the user equipment (160; 200) is already registered in the pool (100) if the received pool identifier and the stored pool identifier are equal, or that the user equipment (160; 200) is not registered in the pool (100) if the received pool identifier and the stored pool identifier are not equal,
wherein the initial transfer message sent to the radio network element (150,153,156; 210) comprises the pool registration parameter.

4. Method according to claim 3, wherein the user equipment (160; 200) sends to the radio network element (150, 153, 156; 210) a network element identifier that identifies a dedicated network element (220), at which the user equipment (160; 200) is registered, wherein the dedicated network element (220) is identified uniquely within the pool (100) of network elements (150,153,156; 220).

5. Method according to claim 3 or 4, wherein the second pool identifier is replaced in the memory by the first pool identifier.

6. Method according to claim 4 or 5, wherein the network element identifier is sent to the radio network element within a temporary subscriber identity (TMSI, P-TMSI) that comprises a domain indicator, reallocation data and a subscriber data identifier.

7. User equipment of a mobile communications network comprising means being adapted to perform a method according to any of the claims 3 to 6.

8. Method in a communications network of setting up a signalling connection by a radio network element to a network element of a pool of network elements, wherein the radio network element receives an initial transfer message and routes information given in the initial transfer message at least partly to the network element,
**characterised in** the steps of
- receiving a pool registration parameter indicating a pool registration status of a user equipment which corresponds to a pool identifier comprised by an area identifier, whereby the area identifier, a country code and a mobile network code being comprised by a location information broadcasted by the radio network element, being equal or not equal to a pool identifier memorized in the user equipment,
- determining by use of the pool registration parameter that network element of the pool of network elements, to which the signalling connection is to be set-up,
and wherein the routing is performed to the determined network element.

9. Method according to claim 8, wherein the determination of the network element is performed by choosing one network element of the pool by the radio network element, if the value of the registration parameter indicates that the user equipment is not registered at the pool.

10. Method according to claim 9, wherein a network element identifier is received, that identifies uniquely a dedicated network element of the pool, at which the user equipment is registered, and wherein the dedicated network element is determined,

11. Method according to claim 10, wherein the network element identifier is received within a temporary subscriber identity (TMSI, P-TMSI) that comprises a domain indicator, reallocation data and a subscriber data address.

12. Method according to claim 11, wherein the temporary subscriber identity and the network element identifier are stored in relation to each other for further routing transactions.

13. Method according to any of the claims 8 to 12, performing in addition the method according to claim 1.

14. Radio network element comprising means being adapted to perform a method according to any of the claims 8 to 13.

15. Computer program, loadable into the internal memory of a digital processing unit, comprising software code portions adapted to perform the steps according to any of the claims 1, 3 to 6, 8 to 13, when the computer program is executed on the digital processing unit.

16. Computer program according to claim 15, wherein the computer program is stored on a computer-readable medium.

## Patentansprüche

1. Verfahren zur Unterstützung eines Aufbaus einer Signalisierungsverbindung, wobei ein Funknetzelement (150, 153, 156; 210) eines Mobilkommunikationsnetzes (170) in einem dedizierten Bereich per Broadcast Aufenthaltsortsinformationen sendet, welche eine Mobil-Landeskennzahl, eine Mobilnetzkennzahl und eine Bereichskennung umfassen,
**dadurch gekennzeichnet, dass**
die Bereichskennung mindestens eine Poolkennung umfasst, die mindestens einen Pool von Netzelementen identifiziert, die den Bereich versorgen.

2. Funknetzelement eines Mobilkommunikationsnetzes (170), das so ausgelegt ist, dass es in einem dedizierten Bereich per Broadcast Aufenthaltsortsinformationen sendet, die eine Mobil-Landeskennzahl, eine Mobilnetzkennzahl und eine Bereichskennung umfassen,
**dadurch gekennzeichnet, dass**
die Bereichskennung mindestens eine Poolkennung umfasst, die mindestens einen Pool von Netzelementen identifiziert, die den Bereich versorgen.

3. Verfahren zum Aufbau einer Signalisierungsverbindung durch eine Benutzereinrichtung (160; 200) zu einem Mobilkommunikationsnetz (170), wobei die Benutzereinrichtung (160; 200) eine Erstübertragungsnachricht an ein Funknetzelement (150, 153, 156; 210) des Mobilkommunikationsnetzes (170) sendet,
**gekennzeichnet durch** die folgenden Schritte:
- Empfangen von Aufenthaltsortsinformationen, die durch das Funknetzelement (150, 153, 156; 210) per Broadcast gesendet werden und aus einer Landeskennzahl, einer Mobilnetzkennzahl und einer Bereichskennung bestehen, wobei die Bereichskennung eine erste Poolkennung umfasst, die einen Pool (100) von Netzelementen (110, 115; 220) des Kommunikationsnetzes (170) identifiziert,
- Bestimmen eines Poolregistrierungsparameters durch Vergleichen der ersten Poolkennung mit einer zweiten Poolkennung, die in einem Speicher der Benutzereinrichtung (160; 200) gespeichert ist, derart dass der Poolregistrierungsparameter entweder anzeigt, dass die Benutzereinrichtung (160; 200) bereits im Pool (100) registriert ist, wenn die empfangene Poolkennung und die gespeicherte Poolkennung gleich sind, oder, dass die Benutzereinrichtung (160; 200) nicht im Pool (100) registriert ist, wenn die empfangene Poolkennung und die gespeicherte Poolkennung nicht gleich sind,
wobei die an das Funknetzelement (150, 153, 156; 210) gesendete Erstübertragungsnachricht den Poolregistrierungsparameter umfasst.

4. Verfahren nach Anspruch 3, wobei die Benutzereinrichtung (160; 200) an das Funknetzelement (150, 153, 156; 210) eine Netzelementkennung sendet, die ein dediziertes Netzelement (220) identifiziert, bei welchem die Benutzereinrichtung (160; 200) registriert ist, wobei das dedizierte Netzelement (220) innerhalb des Pools (100) von Netzelementen (150, 153, 156; 220) eindeutig identifiziert wird.

5. Verfahren nach Anspruch 3 oder 4, wobei die zweite Poolkennung im Speicher durch die erste Poolkennung ersetzt wird.

6. Verfahren nach Anspruch 4 oder 5, wobei die Netzelementkennung innerhalb einer temporären Teilnehmerkennung (TMSI, P-TMSI), die eine Domänenanzeige, Neuzuteilungsdaten und eine Teilnehmerdatenkennung umfasst, an das Funknetzelement gesendet wird.

7. Benutzereinrichtung eines Mobilkommunikationsnetzes, umfassend Mittel, die so ausgelegt sind, dass sie ein Verfahren nach einem der Ansprüche 3 bis 6 durchführen.

8. Verfahren in einem Kommunikationsnetz zum Aufbauen einer Signalisierungsverbindung durch ein Funknetzelement zu einem Netzelement eines Pools von Netzelementen, wobei das Funknetzelement eine Erstübertragungsnachricht empfängt und Informationen, die in der Erstübertragungsnachricht angegeben sind, wenigstens teilweise an das Netzelement weiterleitet,
**gekennzeichnet durch** die folgenden Schritte:
- Empfangen eines Poolregistrierungsparameters, der einen Poolregistrierungsstatus einer Benutzereinrichtung anzeigt, welcher einer Poolkennung entspricht, die in einer Bereichskennung enthalten ist, wobei die Bereichskennung, eine Landeskennzahl und eine Mobilnetzkennzahl, die in Aufenthaltsortsinformationen enthalten sind, die durch das Funknetzelement per Broadcast gesendet werden, gleich oder nicht gleich einer Poolkennung sind, die in der Benutzereinrichtung gespeichert ist,
- Bestimmen **durch** Verwendung des Poolregistrierungsparameters desjenigen Netzelements des Pools von Netzelementen, zu dem die Signalisierungsverbindung aufgebaut werden soll,
und wobei die Weiterleitung an das bestimmte Netzelement erfolgt.

9. Verfahren nach Anspruch 8, wobei die Bestimmung des Netzelements durch Wählen eines Netzelements des Pools durch das Funknetzelement erfolgt, wenn der Wert des Registrierungsparameters anzeigt, dass die Benutzereinrichtung nicht beim Pool registriert ist.

10. Verfahren nach Anspruch 9, wobei eine Netzelementkennung empfangen wird, die ein dediziertes Netzelement des Pools eindeutig identifiziert, bei welchem die Benutzereinrichtung registriert ist, und wobei das dedizierte Netzelement bestimmt wird.

11. Verfahren nach Anspruch 10, wobei die Netzelementkennung innerhalb einer temporären Teilnehmerkennung (TMSI, P-TMSI) empfangen wird, die eine Domänenanzeige, Neuzuteilungsdaten und eine Teilnehmerdatenkennung umfasst.

12. Verfahren nach Anspruch 11, wobei die temporäre Teilnehmerkennung und die Netzelementkennung in Bezug aufeinander für weitere Weiterleitungstransaktionen gespeichert werden.

13. Verfahren nach einem der Ansprüche 8 bis 12, das außerdem das Verfahren nach Anspruch 1 durchführt.

14. Funknetzknoten, umfassend Mittel, die so ausgelegt ist, dass sie ein Verfahren nach einem der Ansprüche 8 bis 13 durchführen.

15. Computerprogramm, das in den internen Speicher einer digitalen Verarbeitungseinheit geladen werden kann und Softwarecodeabschnitte umfasst, die so ausgelegt sind, dass sie die Schritte nach einem der Ansprüche 1, 3 bis 6, 8 bis 13 ausführen, wenn das Computerprogramm auf der digitalen Verarbeitungseinheit ausgeführt wird.

16. Computerprogramm nach Anspruch 15, wobei das Computerprogramm auf einem computerlesbaren Medium ist.

## Revendications

1. Procédé de prise en charge d'un établissement d'une signalisation de connexion, dans lequel un élément de réseau radio (150, 153, 156 ; 210) d'un réseau de communications mobile (170) diffuse dans une zone dédiée une information de localisation, qui comprend un code de pays mobile, un code de réseau mobile et un identifiant de zone,
**caractérisé en ce que**
l'identifiant de zone comprend au moins un identifiant de groupe identifiant au moins un groupe d'éléments de réseau desservant la zone.

2. Elément de réseau radio d'un réseau de communications mobile (170) adapté afin de diffuser dans une zone dédiée une information de localisation, qui comprend un code de pays mobile, un code de réseau mobile et un identifiant de zone,
**caractérisé en ce que**
l'identifiant comprend au moins un identifiant de groupe identifiant au moins un groupe d'éléments de réseau desservant la zone.

3. Procédé d'établissement d'une connexion de signalisation par un équipement d'utilisateur (160 ; 200) vers un réseau de communication mobile (170), dans lequel l'équipement d'utilisateur (160 ; 200) envoie un message de transfert initial à un élément de réseau radio (150, 153, 156 ; 210) du réseau de communication mobile (170),
**caractérisé par** les étapes consistant à :
- recevoir une information de localisation diffusée par l'élément de réseau radio (150, 153, 156 ; 210) et constituée d'un code de pays, un code de réseau mobile et un identifiant de zone, l'identifiant de zone comprend un premier identifiant de groupe identifiant un groupe (100) d'éléments de réseau (110, 115 ; 220) du réseau de communication (170),
- déterminer un paramètre d'enregistrement de groupe en comparant le premier identifiant de groupe avec un second identifiant de groupe mémorisé dans une mémoire de l'équipement d'utilisateur (160 ; 200) de sorte que le paramètre d'enregistrement de groupe indique soit que l'équipement d'utilisateur (160 ; 200) est déjà enregistré dans le groupe (100) si l'identifiant de groupe reçu et l'identifiant de groupe mémorisé sont égaux, soit que l'équipement d'utilisateur (160 ; 200) n'est pas enregistré dans le groupe (100) si l'identifiant de groupe reçu et l'identifiant de groupe mémorisé ne sont pas égaux,
dans lequel le message de transfert initial envoyé à l'élément de réseau radio (150, 153, 156 ; 210) comprend le paramètre d'enregistrement de groupe.

4. Procédé selon la revendication 3, dans lequel l'équipement d'utilisateur (160 ; 200) envoie à l'élément de réseau radio (150, 153, 156 ; 210) un identifiant d'élément de réseau qui identifie un élément de réseau dédié (220), au niveau duquel l'équipement d'utilisateur (160 ; 200) est enregistré, dans lequel l'élément de réseau dédié (220) est identifié de manière unique à l'intérieur du groupe (100) d'éléments de réseau (150, 153, 156 ; 220).

5. Procédé selon les revendications 3 ou 4, dans lequel le second identifiant de groupe est remplacé dans la mémoire par le premier identifiant de groupe.

6. Procédé selon les revendications 4 ou 5, dans lequel l'identifiant d'élément de réseau est envoyé à l'élément de réseau radio à l'intérieur d'une identité d'abonné temporaire (TMSI, P-TMSI) qui comprend un indicateur de domaine, des données de réallocation et un identifiant de données d'abonné.

7. Equipement d'utilisateur d'un réseau de communication mobile comprenant des moyens étant adaptés afin de mettre en oeuvre un procédé selon une quelconque des revendications 3 à 6.

8. Procédé dans un réseau de communication d'établissement d'une connexion de signalisation par un élément de réseau radio vers un élément de réseau d'un groupe d'éléments de réseau, dans lequel l'élément de réseau radio reçoit un message de transfert initial et route l'information donnée dans le message dd transfert initial au moins partiellement vers l'élément de réseau,
**caractérisé par** les étapes consistant à
- recevoir un paramètre d'enregistrement de groupe indiquant un statut d'enregistrement de groupe d'un équipement d'utilisateur, qui correspond à un identifiant de groupe compris par un identifiant de zone, moyennant quoi l'identifiant de zone, un code de pays et un code de réseau mobile sont compris par une information de localisation diffusée par l'élément de réseau radio, étant égale ou non égale à un identifiant de groupe mémorisé dans l'équipement d'utilisateur,
- déterminer par utilisation du paramètre d'enregistrement de groupe cet élément de réseau du groupe d'éléments de réseau, vers lequel la connexion de signalisation doit être établie, et dans lequel le routage est effectué par l'élément de réseau déterminé.

9. Procédé selon la revendication 8, dans lequel la détermination de l'élément de réseau est effectuée en choisissant un élément de réseau du groupe par l'élément de réseau radio, si la valeur du paramètre d'enregistrement indique que l'équipement d'utilisateur n'est pas enregistré au niveau du groupe.

10. Procédé selon la revendication 9, dans lequel un identifiant d'élément de réseau est reçu, qui identifie de manière unique un élément de réseau dédié du groupe, au niveau duquel l'équipement d'utilisateur est enregistré, et dans lequel l'élément de réseau dédié est déterminé.

11. Procédé selon la revendication 10, dans lequel l'identifiant d'élément de réseau est reçu à l'intérieur d'une identité d'abonné temporaire (TMSI, P-TMSI) qui comprend un indicateur de domaine, des données de réallocation et une adresse de données d'abonné.

12. Procédé selon la revendication 11, dans lequel l'identité d'abonné temporaire et l'identifiant d'élément de réseau sont mémorisés relativement l'un à l'autre en vue d'autres transactions de routage.

13. Procédé selon une quelconque des revendications 8 à 12, mettant en oeuvre de plus le procédé selon la revendication 1.

14. Elément de réseau radio comprenant des moyens étant adaptés afin de mettre en oeuvre un procédé selon une quelconque des revendications 8 à 13.

15. Programme informatique, chargeable dans la mémoire interne d'une unité de traitement numérique, comprenant des portions de code logiciel adaptées afin de mettre en oeuvre les étapes selon une quelconque des revendications 1, 3 à 6, 8 à 13, quand le programme informatique est exécuté sur l'unité de traitement numérique.

16. Programme informatique selon la revendication 15, dans lequel le programme informatique est mémorisé sur un support lisible par ordinateur.
